(19) Europäisches Patentamt
European Patent Office
Office européen des brevets

(11) **EP 2 783 812 A2**

(12) **EUROPEAN PATENT APPLICATION**

(43) Date of publication:
**01.10.2014 Bulletin 2014/40**

(51) Int Cl.:
***B25J 9/16*** (2006.01)

(21) Application number: **14159874.8**

(22) Date of filing: **14.03.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **18.03.2013 JP 2013055238**

(71) Applicant: **Kabushiki Kaisha Yaskawa Denki Kitakyushu-shi, Fukuoka 806-0004 (JP)**

(72) Inventors:
• **Sekiyama, Tomoyuki**
  **Kitakyushu-shi, Fukuoka 806-0004 (JP)**
• **Kamiya, Yosuke**
  **Kitakyushu-shi, Fukuoka 806-0004 (JP)**

(74) Representative: **Viering, Jentschura & Partner Patent- und Rechtsanwälte Grillparzerstrasse 14 81675 München (DE)**

(54) **Robot device and method for manufacturing an object**

(57) A robot device (1) includes: a robot controller (11) configured to operate a robot (R2) based on a motion program specifying a motion of the robot; a robot imaging unit (12) configured to acquire image data of an image including the robot; and a data processor (13). The data processor includes: a virtual-space-data holder (18) configured to hold virtual space data including information on a virtual object (VB) in a virtual space (VS), the virtual space simulating a real working space (RS) of the robot, the virtual object simulating an object present in the real working space; and an augmented-reality-space-data generator (23) configured to generate augmented-reality-space data by use of the image data and the virtual space data.

*FIG. 3*

EP 2 783 812 A2

**Description**

BACKGROUND

1. Technical Field

This disclosure relates to a robot device and a method for manufacturing a processing object.

2. Related Art

A robot device has a function to teach a motion to a robot. The robot to which the motion is taught by this robot device is used to, for example, manufacture a processing object.

What is called an augmented reality (AR) technology synthesizes imaging data obtained by imaging of a camera and image data generated by a computer so as to display the synthesized data. WO2011/080882 discloses a robot device using the AR technology.

This robot device is used by an engineer to teach the motion to the robot. However, in the case where a teaching work to the robot is performed under actual working conditions, the robot may interfere with an object around the robot. Accordingly, it has been difficult to perform a teaching work suitable for an actual motion in some cases.

Therefore, one object of this disclosure is to provide a robot device that facilitates the teaching work to the robot.

SUMMARY

A robot device includes according to one embodiment of the present disclosure: a robot controller configured to operate a robot based on a motion program specifying a motion of the robot; a robot imaging unit configured to acquire image data of an image including the robot; and a data processor. The data processor includes: a virtual-space-data holder configured to hold virtual space data including information on a virtual object in a virtual space, the virtual space simulating a real working space of the robot, the virtual object simulating an object present in the real working space; and an augmented-reality-space-data generator configured to generate augmented-reality-space data by use of the image data and the virtual space data.

BRIEF DESCRIPTION OF DRAWINGS

Fig. 1 is a diagram illustrating a situation where a teaching work to a robot is performed using a robot device;
Fig. 2 is a diagram for describing an exemplary robot;
Fig. 3 is a block diagram for describing a configuration of the robot device;
Fig. 4 is a diagram for describing virtual space data;
Fig. 5 is a diagram for describing first trajectory data and second trajectory data;
Fig. 6 is a diagram for describing a computer that achieves the robot device;
Fig. 7 is a diagram for describing a main process in a robot teaching method;
Fig. 8 is a diagram for describing the main process in the robot teaching method;
Fig. 9 is a diagram illustrating an exemplary image of an augmented reality space;
Fig. 10 is a diagram illustrating an exemplary image of the augmented reality space;
Fig. 11 is a diagram illustrating an exemplary image of the augmented reality space;
Fig. 12 is a diagram illustrating an exemplary image of the augmented reality space;
Fig. 13 is a diagram illustrating an exemplary image of the augmented reality space;
Fig. 14 is a diagram illustrating an exemplary image of the augmented reality space;
Fig. 15 is a diagram illustrating an exemplary image of the augmented reality space;
Fig. 16 is a diagram for describing a method for calculating coordinates to generate trajectory data;
Figs. 17A and 17B are diagrams illustrating exemplary images taken by the robot imaging device;
Fig. 18 is a diagram for describing a method for calculating coordinates to generate trajectory data;
Figs. 19A and 19B are diagrams for describing a method for calculating coordinates to generate trajectory data; and
Fig. 20 is a diagram for describing a method for determining interference.

DETAILED DESCRIPTION

In the following detailed description, for purpose of explanation, numerous specific details are set forth in order to provide a thorough understanding of the disclosed embodiments. It will be apparent, however, that one or more embodiments may be practiced without these specific details. In other instances, well-known structures and devices are schematically shown in order to simplify the drawing.

A robot device includes according to one embodiment of the present disclosure: a robot controller configured to operate a robot based on a motion program specifying a motion of the robot; a robot imaging unit configured to acquire image data of an image including the robot; and a data processor. The data processor includes: a virtual-space-data holder configured to hold virtual space data including information on a virtual object in a virtual space, the virtual space simulating a real working space of the robot, the virtual object simulating an object present in the real working space; and an augmented-reality-space-data generator configured to generate augmented-reality-space data by use of the image data and the virtual space data.

This robot device facilitates the teaching work to the robot.

Hereinafter, a detailed description will be given of one embodiment of this disclosure with reference to the accompanying drawings. In the description, the element that is substantially the same will be provided with the same reference numeral, and the duplicated description will be omitted.

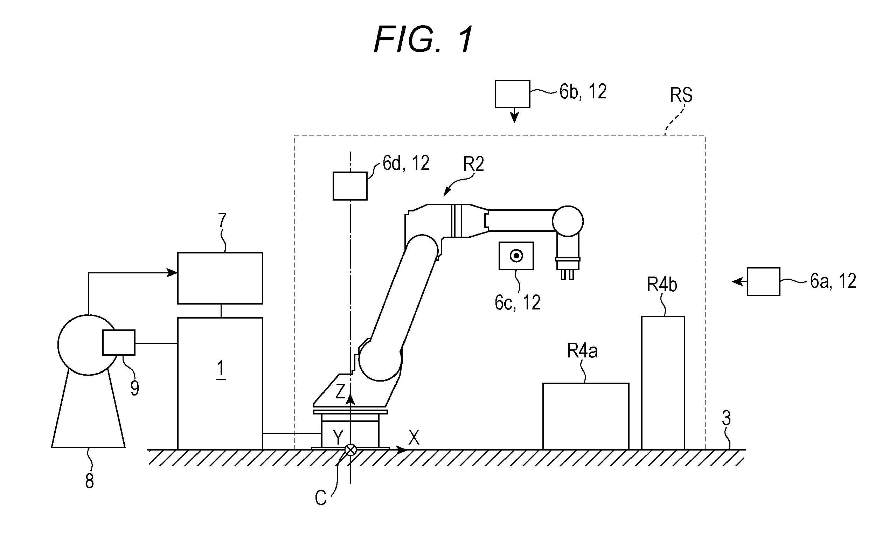

A description will be given of an environment where a robot device 1 is used. Fig. 1 is a diagram illustrating a situation where the robot device 1 is used to perform teaching work (teaching) of the robot R2. As illustrated in Fig. 1, a real working space RS is a space where a robot R2 performs a predetermined work. In the real working space RS, for example, the robot R2 and workbenches R4a and R4b are arranged.

Images of the inside of the real working space RS are taken by a plurality of cameras (imaging unit) 6a to 6d. The robot R2 is coupled to the robot device 1. The robot device 1 has a function that controls the motion of the robot R2 and a function that performs a teaching work to the robot R2. The robot device 1 is coupled to an input unit 7 for inputting a predetermined program, data, or similar information to the robot device 1. In the robot device 1 of this embodiment, an engineer 8 operates the input unit 7. The engineer 8 operates the input unit 7 while visibly recognizing a video on a display unit 9 such as a head-mounted display included in the robot device 1, so as to perform teaching to the robot R2.

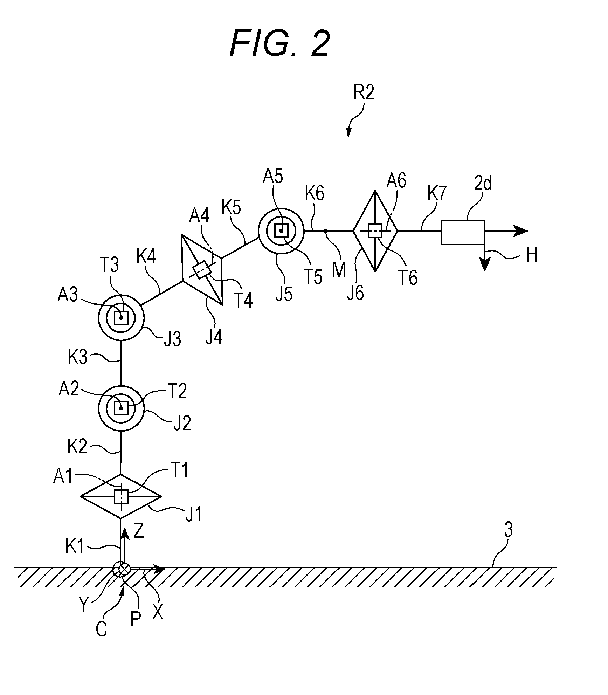

Fig. 2 is a diagram for describing one example of the robot R2. As illustrated in Fig. 2, the robot R2 is an articulated robot with six degrees of freedom. One end side of the robot R2 is secured to a floor surface 3. At the other end side of the robot R2, the hand 2d is disposed. The position and the rotation angle in each portion of the robot R2 are illustrated using a robot coordinate system C as reference coordinates. In the robot coordinate system C, a direction perpendicular to the floor surface 3 on which the robot R2 is arranged is assumed to be the Z direction, and a direction parallel to the floor surface 3 is assumed to be the X direction. Furthermore, a direction (a direction perpendicular to the paper surface) perpendicular to the X direction and the Z direction is assumed to be the Y direction. Regarding the origin of the robot coordinate system C, for example, a point where the robot R2 is fixed to the floor surface 3 is assumed to be a fixed point P, and the fixed point P is assumed to be the origin of the robot coordinate system C.

The robot R2 includes a plurality of links that forms an arm structure. A link K1 is secured to the floor surface 3 on which the robot R2 is installed. A link K2 is rotatably coupled to the link K1 around a rotation axis A1 perpendicular to the floor surface 3. A link K3 is rotatably coupled to the link K2 around a rotation axis A2 perpendicular to the rotation axis A1. A link K4 is rotatably coupled to the link K3 around a rotation axis A3 parallel to the rotation axis A2. A link K5 is rotatably coupled to the link K4 around a rotation axis A4 perpendicular to the rotation axis A3. A link K6 is rotatably coupled to the link K5 around a rotation axis A5 perpendicular to the rotation axis A4. A link K7 is rotatably coupled to the link K6 around a rotation axis A6 perpendicular to the rotation axis A5.

In this embodiment, the terms "parallel" and "perpendicular" have wide meanings that include not only "parallel" and "perpendicular" as strict meaning, but also include meaning slightly shifted from "parallel" and "perpendicular". In the respective rotation axes A1 to A6, servo motors (joints J1 to J6) are disposed. The respective servo motors include angle sensors T1 to T6 that detect respective rotation positions (rotation angles). The respective servo motors are coupled to the robot device 1 and configured to operate based on control instructions of the robot device 1.

(Robot Device)

The robot device 1 inputs a control signal based on a motion program to the robot R2 so as to operate the robot R2. Subsequently, the robot device 1 generates an actual motion path of the robot R2 based on output values of the angle sensors T1 to T6 arranged in the respective portions of the robot R2 and images of the robot R2 taken by the cameras 6a to 6d. To perform a desired motion by the robot R2, the engineer 8 modifies the motion program based on the difference between the motion path based on the motion program and the actual motion path.

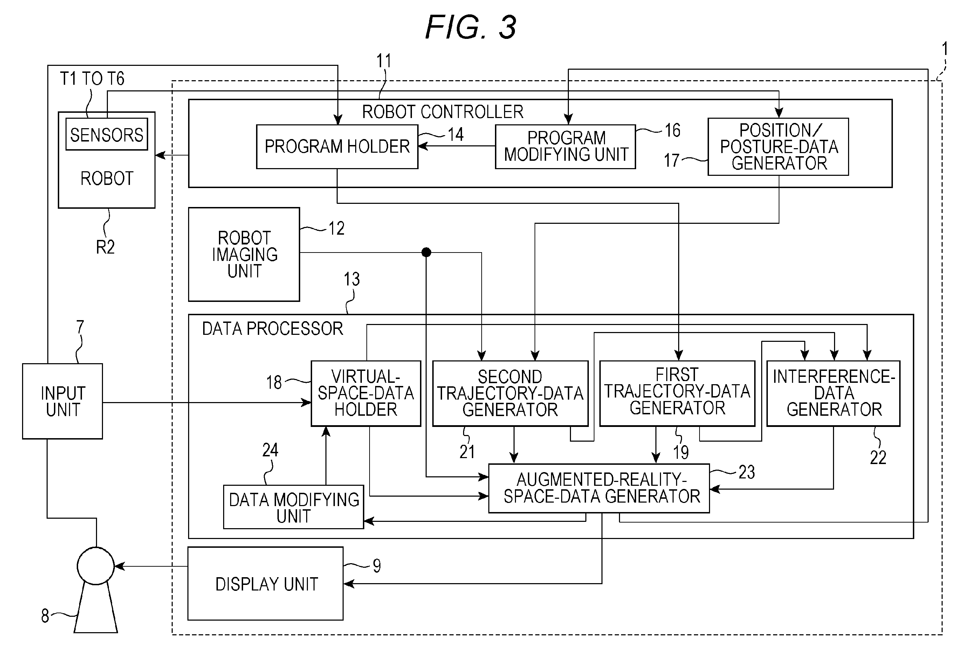

Fig. 3 is a block diagram for describing the configuration of the robot device 1. As illustrated in Fig. 3, the robot device 1 includes a robot controller (robot control means) 11, a robot imaging unit (robot imaging means) 12, a data processor (data processing means) 13, and a display unit 9. The robot controller 11 operates the robot R2. The robot imaging unit 12 acquires image data of an image that includes the robot R2. The data processor 13 generates augmented-reality-space data. The display unit 9 displays an image of the augmented reality space.

(Robot Controller)

The robot controller 11 has a function that generates a control signal based on the motion program and drives the robot. Additionally, the robot controller 11 has a function that modifies the motion program based on data input from the data processor 13. The robot controller 11 outputs the control signal to the robot R2. Furthermore, the robot controller 11 receives signals from the input unit 7 and the data processor 13.

The robot controller 11 includes a program holder 14, a program modifying unit 16, and a position/posture-data generator 17. The program holder 14 holds the motion program. The program modifying unit 16 modifies the motion program. The position/posture-data generator 17 generates position/posture data.

The program holder 14 has a function that holds the motion program for specifying the motion of the robot R2. The program holder 14 receives the motion program through the input unit 7. The motion program is modified by the input unit 7 and the program modifying unit 16.

The program modifying unit 16 has a function that modifies the motion program based on information output from the data processor 13. The program modifying unit 16 receives predetermined data from the data processor 13. Additionally, the program modifying unit 16 outputs data for modifying the motion program to the program holder 14. Here, the program modifying unit 16 may be configured not only to assist a modification work of the motion program performed by the engineer 8, but also proactively modify the motion program.

The position/posture-data generator 17 has a function that receives sensor data output from the angle sensors T1 to T6 of the robot R2. The position/posture-data generator 17 receives the sensor data from the angle sensors T1 to T6. Additionally, the position/posture-data generator 17 outputs the position/posture data to the data processor 13.

(Robot Imaging Unit)

The robot imaging unit 12 includes the plurality of cameras 6a to 6d. The robot imaging unit 12 has a function that acquires image data and a function that outputs the image data to the data processor 13.

As illustrated in Fig. 1, the robot imaging unit 12 includes the cameras 6a to 6d arranged in a room (a site) where the real working space RS is set. The camera 6a acquires an image in which the robot R2 and similar object in the real working space RS are viewed from the X-axis direction. The camera 6b acquires an image in which the robot R2 and similar object in the real working space RS are viewed from the Z-axis direction. The camera 6c acquires an image in which the robot R2 and similar object in the real working space RS are viewed from the Y-axis direction. These cameras 6a to 6c are secured to respective positions using the robot coordinate system C as reference. The image data obtained by these cameras 6a to 6c is, for example, image data of an image that includes the image of the robot R2 and the images of the workbenches R4a and R4b along a fixed visual line.

The robot imaging unit 12 includes the camera 6d arranged on the Z-axis of the robot coordinate system C using the robot coordinate system C as reference. This camera 6d is configured to allow zoom and pan. This camera 6d can acquire, for example, an image following the movement of the hand 2d of the robot R2 (see Fig. 2). The portion followed by the camera 6d is not limited to the hand 2d. The camera 6d may acquire an image by following the movement of a different portion of the robot R2.

(Data Processor)

The data processor 13 has a function that generate augmented-reality-space data by use of various data input from the robot controller 11 and the robot imaging unit 12. Additionally, the data processor 13 has a function that modifies virtual space data by use of the augmented-reality-space data. As illustrated in Fig. 3, the data processor 13 includes a virtual-space-data holder (virtual-space-data holding means) 18, a first trajectory-data generator 19, a second trajectory-data generator 21, an interference-data generator 22, an augmented-reality-space-data generator (augmented-reality-space-data generating means) 23, and a data modifying unit 24. The virtual-space-data holder 18 holds the virtual space data. The first trajectory-data generator 19 generates first trajectory data. The second trajectory-data generator 21 generates second trajectory data. The interference-data generator 22 generates interference data. The augmented-reality-space-data generator 23 generates augmented-reality-space data. The data modifying unit 24 modifies the virtual space data.

(Virtual-Space-Data Holder)

The virtual-space-data holder 18 has a function that holds virtual space data described later. The virtual-space-data holder 18 receives the virtual space data through the input unit 7. Additionally, the virtual-space-data holder 18 receives information for modifying the virtual space data from the data modifying unit 24. Subsequently, the virtual-space-data holder 18 outputs the virtual space data to the interference-data generator 22 and the augmented-reality-space-data generator 23.

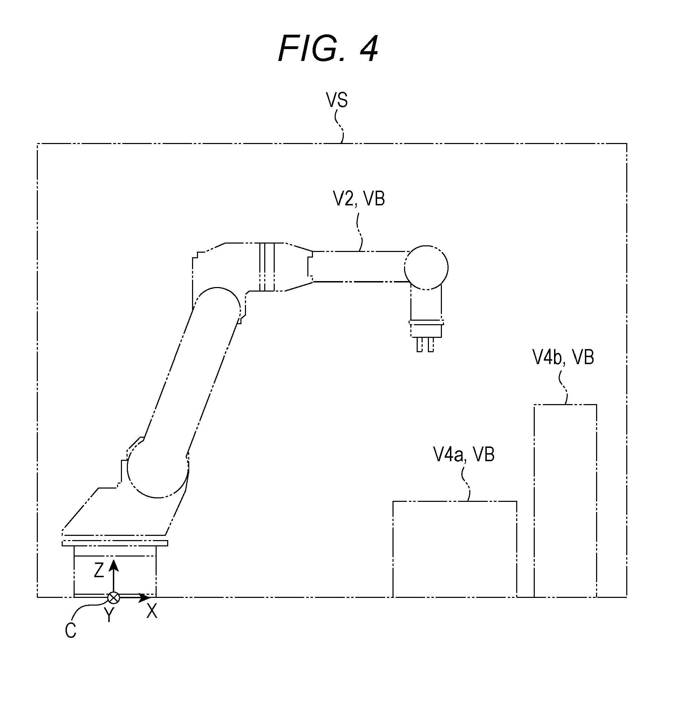

Fig. 4 is a diagram for describing the virtual space data. As illustrated in Fig. 4, the virtual space data includes information related to virtual objects VB in a virtual space VS. The virtual space VS is a simulated space that simulates the real working space RS on a computer. The virtual objects VB each simulate the shape and the arrangement of the object present in the real working space RS. The objects present in the real working space RS include, for example, the robot R2 and the workbenches R4a and R4b. The virtual objects VB include a virtual robot V2 and virtual workbenches V4a and V4b. These virtual objects VB are set in the virtual space VS. The positions and the shapes of these virtual objects VB are specified using the robot coordinate system C as the reference coordinates. The positions and the shapes of the virtual objects VB may be specified based on a coordinate system other than the robot coordinate system C.

(First Trajectory-Data Generator)

The first trajectory-data generator 19 generates first trajectory data described later. As illustrated in Fig. 3, the first trajectory-data generator 19 receives the motion program from the program holder 14 of the robot controller 11. Additionally, the first trajectory-data generator 19 outputs the first trajectory data to the augmented-reality-space-data generator 23. Furthermore, the first trajectory-data generator 19 outputs the first trajectory data to the interference-data generator 22.

(Second Trajectory-Data Generator)

The second trajectory-data generator 21 has a function that generates second trajectory data described later. The second trajectory-data generator 21 receives image data from the robot imaging unit 12. The second trajectory-data generator 21 receives the position/posture data from the position/posture-data generator 17. Additionally, the second trajectory-data generator 21 outputs the second trajectory data to the interference-data generator 22. Furthermore, the second trajectory-data generator 21 outputs the second trajectory data to the augmented-reality-space-data generator 23.

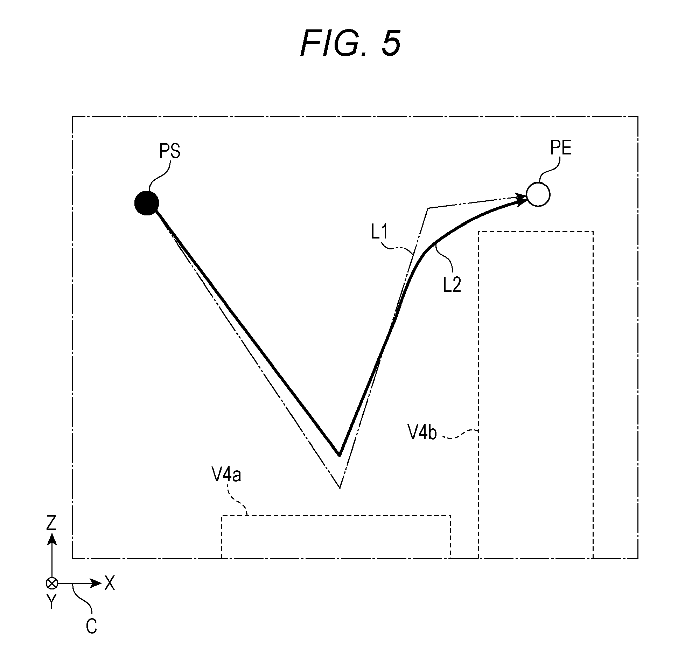

Here, a description will be given of the first trajectory data and the second trajectory data. Fig. 5 is a diagram for describing the first trajectory data and the second trajectory data. As illustrated in Fig. 5, the first trajectory data corresponds to a first trajectory L1 based on a control signal input to the robot R2. This first trajectory L1 does not always illustrate the actual motion trajectory of the robot R2. Accordingly, the first trajectory data is generated based on the motion program in the first trajectory-data generator 19 (see Fig. 3).

In contrast, the second trajectory data corresponds to a second trajectory L2 that is the actual motion trajectory of the robot R2. Accordingly, the second trajectory data is generated by the second trajectory-data generator 21 using at least one of the position/posture data and the image data (see Fig. 3). Here, a description will be given of the case where the second trajectory-data generator 21 uses the sensor data to generate the second trajectory data. In this case, the second trajectory-data generator 21 uses matrix calculation based on known forward kinematics using the angle data from the angle sensors T1 to T6 and the respective lengths of the links K1 to K7 of the robot R2 as variables. Accordingly, the second trajectory-data generator 21 can obtain the second trajectory data.

A description will be given of a method for generating the trajectory data using the image data. The three-dimensional coordinates of one point at the tip of the hand 2d can be obtained from, for example, the image acquired by two cameras among the fixed cameras (the robot imaging unit 12).

The method for extracting the point of the hand 2d using the image can employ a method described as follows. For example, a circle mark with a color different from those of other parts is attached to the one point at the tip of the hand 2d. The one point may be extracted by image processing for detecting the color and obtaining the center of the circle mark. Alternatively, an LED may be mounted on the tip of the hand 2d, and the one point may be extracted by image processing that clips the image by threshold of luminance. If advanced image processing is possible, the hand 2d may be preliminarily registered as a three-dimensional model to extract a portion matched with the three-dimensional model in the image.

Subsequently, at a constant cycle, coordinates on two images are extracted and coordinate transform is performed into the three-dimensional robot coordinate system C, thus generating the trajectory data. Furthermore, in the case where the posture of the hand 2d is also calculated, coordinates of three points on the hand 2d are three-dimensionally measured each time so as to transform the coordinates into those of the robot coordinate system C. Subsequently, the posture of the plane formed by the three points is calculated so as to calculate the posture of the hand 2d.

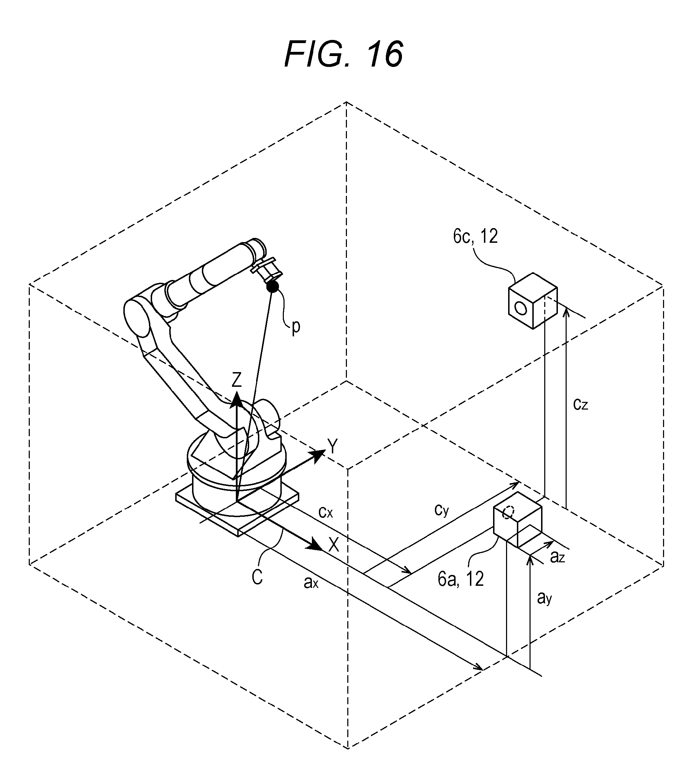

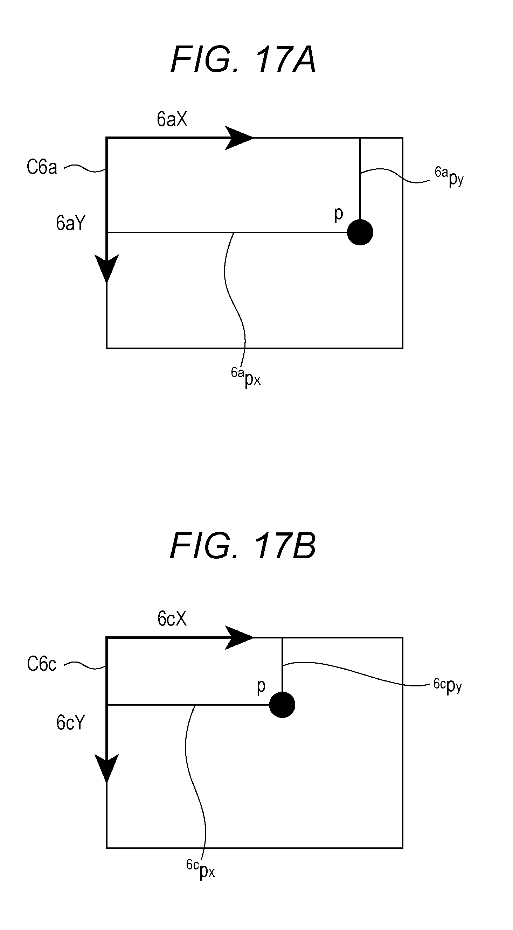

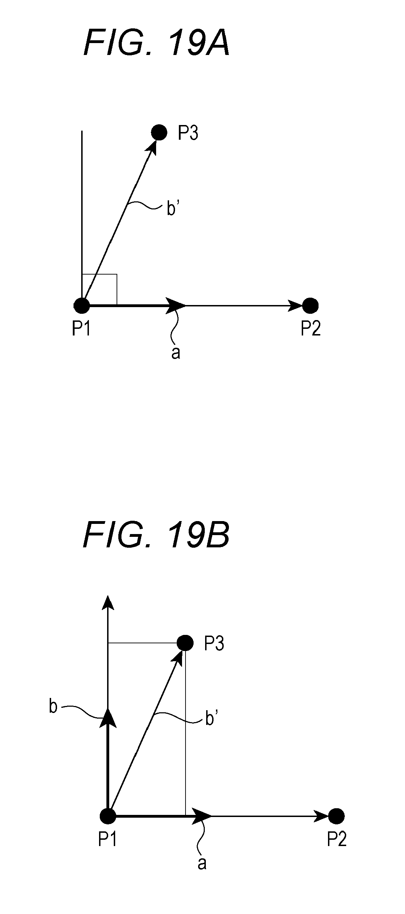

As one example, a description will be given of coordinate transformation in the case where the camera 6a and the camera 6c are used for three-dimensional measurement with reference to Fig. 16 to Figs. 19A and 19B. Fig. 16 and Fig. 18 to Figs. 19A and 19B are diagrams for describing a method for calculating coordinates so as to generate trajectory data. Fig. 17A is a diagram illustrating an exemplary image acquired by the camera 6a. Fig. 17B is a diagram illustrating an exemplary image acquired by the camera 6c. For ease of the description, the image plane of the camera 6a is assumed to be parallel to the YZ plane of the robot coordinate system C. Similarly, the image plane of the camera 6c is assumed to be parallel to the XZ plane of the robot coordinate system C. The camera 6a is assumed to be arranged at coordinates $[a_x, a_y, a_z]$ viewed from the robot coordinate system C. The camera 6c is assumed to be arranged at coordinates $[c_x, c_y, c_z]$ viewed from the robot coordinate system C.

Firstly, coordinates $[^{6a}p_x, {}^{6a}p_y]$ (see Fig. 17A) of a point "p" of the hand 2d viewed from an image coordinate system C6a is acquired from the image of the camera 6a. Subsequently, the coordinates are transformed into a value viewed from the robot coordinate system C. For transformation between the robot coordinate system C and the image coordinate system C6a (see the formula (1) below), a homogeneous transformation matrix $^{C}T_{6a}$ is used. The homogeneous transformation matrix $^{C}T_{6a}$ represents the position and posture of the image coordinate system viewed from the robot coordinate system C (see the formula (2) below). Here, "*" in the formula (1) indicates an unknown value.

$$\begin{bmatrix} {}^{C}p_X \\ {}^{C}p_Y \\ {}^{C}p_Z \\ \hline 1 \end{bmatrix} = {}^{C}\mathbf{T}_{6a} \cdot \begin{bmatrix} {}^{6a}p_x \\ {}^{6a}p_y \\ * \\ \hline 1 \end{bmatrix} = \begin{bmatrix} * \\ {}^{6a}p_x + a_y \\ -{}^{6a}p_y + a_z \\ \hline 1 \end{bmatrix} \cdots \ (1)$$

$$^{C}\mathbf{T}_{6a} = \left[ \begin{array}{ccc|c} 0 & 0 & -1 & a_x \\ 1 & 0 & 0 & a_y \\ 0 & -1 & 0 & a_z \\ \hline 0 & 0 & 0 & 1 \end{array} \right] \cdots \ (2)$$

Similarly, the coordinates $[^{6c}p_x, {}^{6c}p_y]$ (see Fig. 17B) of the point "p" of the hand 2d viewed from the image coordinate system C6c is acquired from the image of the camera 6c. Subsequently, a homogeneous transformation matrix $^{C}T_{6c}$ (see the formula (4) below) is used to transform the coordinates into a value viewed from the robot coordinate system C (see the formula (3) below).

$$\begin{bmatrix} {}^{C}p_X \\ {}^{C}p_Y \\ {}^{C}p_Z \\ \hline 1 \end{bmatrix} = {}^{C}\mathbf{T}_{6c} \cdot \begin{bmatrix} {}^{6c}p_x \\ {}^{6c}p_y \\ * \\ \hline 1 \end{bmatrix} = \begin{bmatrix} {}^{6c}p_x + c_x \\ * \\ -{}^{6c}p_y + c_z \\ \hline 1 \end{bmatrix} \cdots \ (3)$$

$$^{C}\mathbf{T}_{6c} = \left[ \begin{array}{ccc|c} 1 & 0 & 0 & c_x \\ 0 & 0 & 1 & c_y \\ 0 & -1 & 0 & c_z \\ \hline 0 & 0 & 0 & 1 \end{array} \right] \cdots \quad (4)$$

Accordingly, the coordinates of the point "p" viewed from the robot coordinate system C is expressed by the formula (5) below.

$$\left[ \begin{array}{c} ^{C}p_X \\ ^{C}p_Y \\ ^{C}p_Z \end{array} \right] = \left[ \begin{array}{c} ^{6c}p_x + c_x \\ ^{6a}p_x + a_y \\ -^{6a}p_y + a_z \end{array} \right] \cdots \quad (5)$$

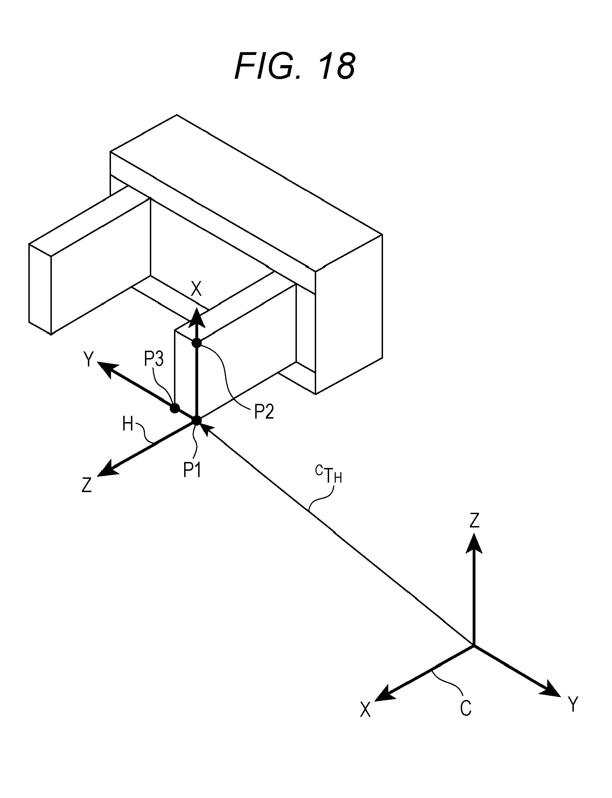

Next, a description will be given of a method for calculating the posture of the hand 2d. Firstly, three points on the hand 2d are extracted by image processing as a point P1, a point P2, and a point P3 (see Fig. 18). Subsequently, the above-described method is used with respect to the respective points P1 to P3 to transform the coordinates of the points P1 to P3 into coordinates viewed from the robot coordinate system C. Next, the formula (6) below is used to calculate a direction vector "a" (with the magnitude of 1) from the point P1 toward the point P2. The formula (7) below is used to calculate a vector b' from the point P1 toward the point P3.

$$\mathbf{a} = \frac{\mathbf{p}_2 - \mathbf{p}_1}{|\mathbf{p}_2 - \mathbf{p}_1|} = \frac{\left[ \begin{array}{c} p_{2x} - p_{1x} \\ p_{2y} - p_{1y} \\ p_{2z} - p_{1z} \end{array} \right]}{\sqrt{(p_{2x} - p_{1x})^2 + (p_{2y} - p_{1y})^2 + (p_{2z} - p_{1z})^2}} \cdots \quad (6)$$

$$\mathbf{b}' = \frac{\mathbf{p}_3 - \mathbf{p}_1}{|\mathbf{p}_3 - \mathbf{p}_1|} \cdots \quad (7)$$

Here, the vector "a" and the vector b' are not always orthogonal to each other (see Fig. 19A). Therefore, the components of the vector b' perpendicular to the vector "a" are calculated to calculate a vector "b" (see the formula (8) below) with the magnitude of 1 (see Fig. 19B).

$$\mathbf{b} = \frac{\mathbf{b'} - (\mathbf{a} \cdot \mathbf{b'})\mathbf{a}}{|\mathbf{b'} - (\mathbf{a} \cdot \mathbf{b'})\mathbf{a}|} \cdots \quad (8)$$

Next, a vector "c" is calculated with a cross product of the vector "a" and the vector "b" (see the formula (9) below).

$$\mathbf{c} = \mathbf{a} \times \mathbf{b} \cdots \quad (9)$$

These three-dimensional vector "a", vector "b", and vector "c" are arranged as follows to calculate a matrix $^{C}T_{H}$ representing the position and posture of the hand 2d in a hand (tool) coordinate system H (see Fig. 18) viewed from the robot coordinate system C (see the formula (10) below). Here, the point P1 is used as a position of the hand 2d.

$$^{C}\mathbf{T}_{H} = \begin{bmatrix} \mathbf{a} & \mathbf{b} & \mathbf{c} & \mathbf{P}_1 \\ \hline 0 & 0 & 0 & 1 \end{bmatrix} \cdots \quad (1\,0)$$

Furthermore, coordinates of the three points are acquired at a constant cycle and the above-described calculation is performed each time so as to obtain and save $^{C}T_{H}$. Accordingly, in addition to the position of the hand 2d, the trajectory data of the posture can be generated.

As described above, the use of at least two viewpoint images output from the robot imaging unit 12 allows generating the second trajectory data of the hand 2d of the robot R2. Furthermore, combining these position/posture data and image data allows generating the second trajectory data. For example, the second trajectory data of the hand 2d obtained by use of the position/posture data is corrected using positional information on the hand 2d obtained by use of the image data. This improves accuracy of the second trajectory data. Here, these first and second trajectory data are specified using the robot coordinate system C as the reference coordinates. The first and second trajectory data are not limited to this, and may be specified based on a coordinate system other than the robot coordinate system C.

(Interference-Data Generator)

The interference-data generator 22 has a function that generates interference data described later. As illustrated in Fig. 3, the interference-data generator 22 receives the first trajectory data from the first trajectory-data generator 19. Additionally, the interference-data generator 22 receives the second trajectory data from the second trajectory-data generator 21. Furthermore, the interference-data generator 22 receives the virtual space data from the virtual-space-data holder 18. The interference-data generator 22 outputs interference data to the augmented-reality-space-data generator 23.

The interference data corresponds to an interference state of the robot R2 with respect to the virtual object VB. Accordingly, the interference data is generated by use of the virtual space data and the first trajectory data or the second trajectory data. The virtual space data has information on the virtual object VB. The first trajectory data or the second trajectory data is information related to the motion of the real robot R2. These virtual space data, first trajectory data, and second trajectory data employ the robot coordinate system C in common as the reference coordinates. This allows checking the presence of interference. The interference state is checked as follows. Firstly, the positions of the hand 2d and the joints J1 to J6 are calculated by forward kinematics. Subsequently, the respective positions are transformed into positions viewed from an object coordinate system (a coordinate system of the object subjected to interference). This determines whether or not the hand 2d and the joints J1 to J6 are present in an interference region.

Here, a description will be given of a method for checking the presence of interference in further detail. Firstly, a description will be given of the forward kinematics calculation of the robot using the robot R2 illustrated in Fig. 2 as an example. Position and posture $^{C}T_{1}$ of a first coordinate system (the joint J1) viewed from the robot coordinate system C is expressed by the formula (11) below. Here, θ1 denotes a rotation angle of the joint J1, and L1 denotes a length of the link K1.

$$^{C}\mathbf{T}_{1} = \left[ \begin{array}{ccc|c} & & & \\ & ^{C}\mathbf{R}_{1} & & ^{C}\mathbf{P}_{1} \\ & & & \\ \hline 0 & 0 & 0 & 1 \end{array} \right] = \left[ \begin{array}{ccc|c} \cos\theta_{1} & -\sin\theta_{1} & 0 & 0 \\ \sin\theta_{1} & \cos\theta_{1} & 0 & 0 \\ 0 & 0 & 1 & L_{1} \\ \hline 0 & 0 & 0 & 1 \end{array} \right] \cdots (1 1)$$

Position and posture $^{1}T_{2}$ of a second coordinate system (the joint J2) viewed from the first coordinate system (the joint J1) is expressed by the formula (12) below.

$$^{1}\mathbf{T}_{2} = \left[ \begin{array}{ccc|c} & & & \\ & ^{1}\mathbf{R}_{2} & & ^{1}\mathbf{P}_{2} \\ & & & \\ \hline 0 & 0 & 0 & 1 \end{array} \right] = \left[ \begin{array}{ccc|c} \cos\theta_{2} & 0 & \sin\theta_{2} & 0 \\ 0 & 1 & 0 & 0 \\ -\sin\theta_{2} & 0 & \cos\theta_{2} & L_{2} \\ \hline 0 & 0 & 0 & 1 \end{array} \right] \cdots (1 2)$$

Position and posture $^{2}T_{3}$ of a third coordinate system (the joint J3) viewed from the second coordinate system (the joint J2) is expressed by the formula (13) below.

$$^{2}\mathbf{T}_{3} = \left[ \begin{array}{ccc|c} & & & \\ & ^{2}\mathbf{R}_{3} & & ^{2}\mathbf{P}_{3} \\ & & & \\ \hline 0 & 0 & 0 & 1 \end{array} \right] = \left[ \begin{array}{ccc|c} \cos\theta_{3} & 0 & \sin\theta_{3} & 0 \\ 0 & 1 & 0 & 0 \\ -\sin\theta_{3} & 0 & \cos\theta_{3} & L_{3} \\ \hline 0 & 0 & 0 & 1 \end{array} \right] \cdots (1 3)$$

Position and posture $^{3}T_{4}$ of a fourth coordinate system (the joint J4) viewed from the third coordinate system (the joint J3) is expressed by the formula (14) below.

$$
{}^{3}\mathbf{T}_{4} = \left[\begin{array}{ccc|c} & & & \\ & {}^{3}\mathbf{R}_{4} & & {}^{3}\mathbf{P}_{4} \\ & & & \\ \hline 0 & 0 & 0 & 1 \end{array}\right] = \left[\begin{array}{ccc|c} \cos\theta_{4} & -\sin\theta_{4} & 0 & 0 \\ \sin\theta_{4} & \cos\theta_{4} & 0 & 0 \\ 0 & 0 & 1 & L_{4} \\ \hline 0 & 0 & 0 & 1 \end{array}\right] \cdots \quad (14)
$$

Position and posture ${}^{4}T_{5}$ of a fifth coordinate system (the joint J5) viewed from the fourth coordinate system (the joint J4) is expressed by the formula (15) below.

$$
{}^{4}\mathbf{T}_{5} = \left[\begin{array}{ccc|c} & & & \\ & {}^{4}\mathbf{R}_{5} & & {}^{4}\mathbf{P}_{5} \\ & & & \\ \hline 0 & 0 & 0 & 1 \end{array}\right] = \left[\begin{array}{ccc|c} \cos\theta_{5} & 0 & \sin\theta_{5} & 0 \\ 0 & 1 & 0 & 0 \\ -\sin\theta_{5} & 0 & \cos\theta_{5} & L_{5} \\ \hline 0 & 0 & 0 & 1 \end{array}\right] \cdots \quad (15)
$$

Position and posture ${}^{5}T_{6}$ of a sixth coordinate system (the joint J6) viewed from the fifth coordinate system (the joint J5) is expressed by the formula (16) below.

$$
{}^{5}\mathbf{T}_{6} = \left[\begin{array}{ccc|c} & & & \\ & {}^{5}\mathbf{R}_{6} & & {}^{5}\mathbf{P}_{6} \\ & & & \\ \hline 0 & 0 & 0 & 1 \end{array}\right] = \left[\begin{array}{ccc|c} \cos\theta_{6} & -\sin\theta_{6} & 0 & 0 \\ \sin\theta_{6} & \cos\theta_{6} & 0 & 0 \\ 0 & 0 & 1 & L_{6} \\ \hline 0 & 0 & 0 & 1 \end{array}\right] \cdots \quad (16)
$$

Position and posture ${}^{6}T_{H}$ of a hand coordinate system H (the hand 2d) viewed from the sixth coordinate system (the joint J6) is expressed by the formula (17) below.

$$
{}^{6}\mathbf{T}_{H} = \left[\begin{array}{ccc|c} & & & \\ & {}^{6}\mathbf{R}_{H} & & {}^{6}\mathbf{P}_{H} \\ & & & \\ \hline 0 & 0 & 0 & 1 \end{array}\right] = \left[\begin{array}{ccc|c} 1 & 0 & 0 & 0 \\ 0 & 1 & 0 & 0 \\ 0 & 0 & 1 & L_{7} \\ \hline 0 & 0 & 0 & 1 \end{array}\right] \cdots \quad (17)
$$

The use of the above-described formulas (11) to (17) allows obtaining the position and posture ${}^{C}T_{H}$ of the hand coordinate system H viewed from the robot coordinate system C by the following product of matrices (see the formula (18) below).

$$^{C}\mathbf{T}_{H} = {}^{C}\mathbf{T}_{1} \cdot {}^{1}\mathbf{T}_{2} \cdot {}^{2}\mathbf{T}_{3} \cdot {}^{3}\mathbf{T}_{4} \cdot {}^{4}\mathbf{T}_{5} \cdot {}^{5}\mathbf{T}_{6} \cdot {}^{6}\mathbf{T}_{H} \cdots \quad (1\ 8)$$

The use of the above-described formulas (11) to (17) allows calculating the position up to the middle. For example, position and posture $^{C}T_5$ of the joint J5 viewed from the robot coordinate system C can be obtained by the formula (19) below.

$$^{C}\mathbf{T}_{5} = {}^{C}\mathbf{T}_{1} \cdot {}^{1}\mathbf{T}_{2} \cdot {}^{2}\mathbf{T}_{3} \cdot {}^{3}\mathbf{T}_{4} \cdot {}^{4}\mathbf{T}_{5} \cdots \quad (1\ 9)$$

Furthermore, for example, in the case where the coordinates of the middle point M of the link K6 (with the length of $L_6$) coupling the joint J5 and the joint J6 together are calculated, the coordinates can be obtained with the formula (20) below.

$$^{C}\mathbf{T}_{M} = {}^{C}\mathbf{T}_{5} \cdot \begin{bmatrix} 1 & 0 & 0 & 0 \\ 0 & 1 & 0 & 0 \\ 0 & 0 & 1 & L_{6}/2 \\ 0 & 0 & 0 & 1 \end{bmatrix} \cdots \quad (2\ 0)$$

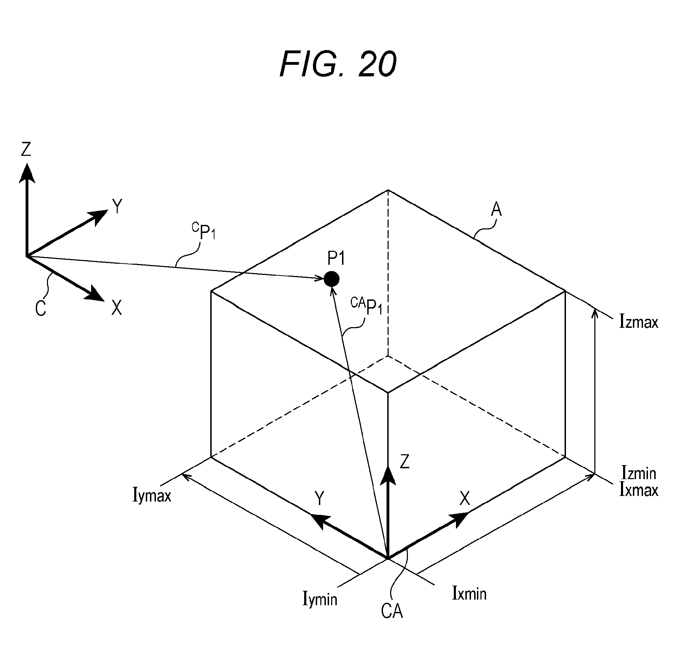

Next, a description will be given of a method for determining interference. Fig. 20 is a diagram for describing the method for determining interference. As illustrated in Fig. 20, the interference region is defined as ranges in the respective coordinate axis directions of the object coordinate system CA. In this description, a space inside of an object A is assumed to be an interference region. Accordingly, the interference region has ranges expressed by the formulas (21) to (23) below within the ranges of the respective coordinate axes of the object coordinate system CA.

$$\mathrm{Ixmin} \leqq X \leqq \mathrm{Ixmax} \quad \cdots \quad (2\ 1)$$

$$\mathrm{Iymin} \leqq Y \leqq \mathrm{Iymax} \quad \cdots \quad (2\ 2)$$

$$\mathrm{Izmin} \leqq Z \leqq \mathrm{Izmax} \quad \cdots \quad (2\ 3)$$

It is determined whether or not the predetermined point P1 is present in the interference region of the object A. Firstly, coordinates $^{C}P_1$ of the point P1 viewed from the robot coordinate system C are calculated. The specific point P1 is, for example, a position of the tip, the elbow, or similar part of the hand 2d of the robot R2 that is desired to be checked if the interference with the robot R2 is present. Subsequently, the formula (24) below is used to transform the

coordinates $^{C}P_1$ into coordinates $^{CA}P_1$ viewed from the object coordinate system CA of the object A.

$$^{CA}\mathbf{P}_1 = \left(^{C}\mathbf{T}_A\right)^{-1} \cdot {}^{C}\mathbf{P}_1 \cdots \quad (24)$$

Next, it is determined whether or not respective components (P1x, P1y, P1z) of $^{CA}P_1$ are present in the interference region. In the case where three conditions of the formulas (25) to (27) are all true, the point P1 is present inside of the object A. Accordingly, the point P1 is determined to interfere with the object A.

$$Ixmin \leqq P1x \leqq Ixmax \quad \cdots \quad (25)$$

$$Iymin \leqq P1y \leqq Iymax \quad \cdots \quad (26)$$

$$Izmin \leqq P1z \leqq Izmax \quad \cdots \quad (27)$$

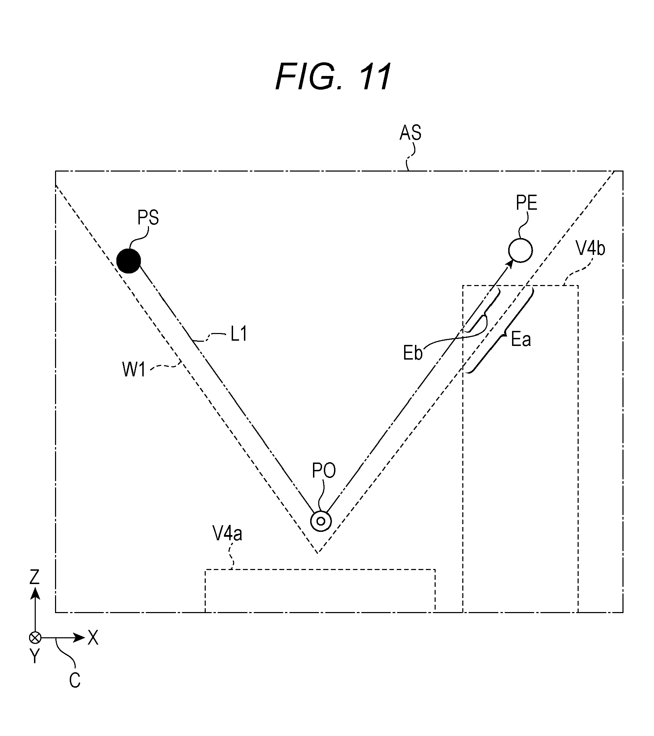

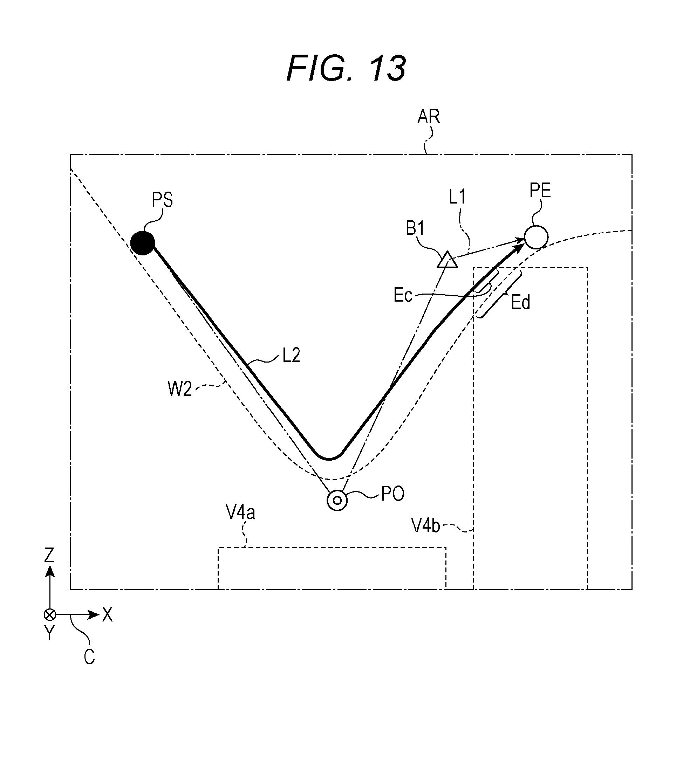

Here, non-interference regions W1 and W2 may be set to the first trajectory L1 and the second trajectory L2 (see Fig. 11 and Fig. 13). The first trajectory L1 and the second trajectory L2 are, for example, trajectories at predetermined points set to the hand 2d of the robot R2. On the other hand, portions of the real robot R2 are present in the peripheral area of the predetermined points. Accordingly, even in the case where the first trajectory L1 and the second trajectory L2 themselves do not cause interference, the real robot R2 may cause interference. Accordingly, with taking into consideration the outer shape or similar parameter of the robot R2, the non-interference regions W1 and W2 are set as regions that may interfere with the real robot R2 in the case where an object invades into this range. Here, a region set to the first trajectory L1 is assumed to be the non-interference region W1 and a region set to the second trajectory L2 is assumed to be the non-interference region W2.

The interference data obtained by the use of the first trajectory data and the virtual space data allows checking the interference state in the case where the robot R2 operates in accordance with the specification by the motion program. That is, this allows checking the motion program. On the other hand, the interference data obtained by the use of the second trajectory data and the virtual space data allows checking the interference state in the case where the robot R2 operates actually. That is, this allows checking the motion trajectory of the real robot R2.

(Augmented-Reality-Space-Data Generator)

The augmented-reality-space-data generator 23 has a function that generates the augmented-reality-space data. The augmented-reality-space-data generator 23 receives the virtual space data from the virtual-space-data holder 18. The augmented-reality-space-data generator 23 receives the first trajectory data from the first trajectory-data generator 19. The augmented-reality-space-data generator 23 receives the second trajectory data from the second trajectory-data generator 21. The augmented-reality-space-data generator 23 receives the image data from the robot imaging unit 12. The augmented-reality-space-data generator 23 receives the interference data from the interference-data generator 22. Additionally, the augmented-reality-space-data generator 23 outputs the augmented-reality-space data to the display unit 9, the data modifying unit 24, and the program modifying unit 16.

In the augmented-reality-space data, the virtual robot V2 and the virtual workbenches V4a and V4b are superimposed on an image in which the real robot R2 is imaged. The augmented-reality-space data is generated by use of the image data and the virtual space data. In this augmented-reality-space data, the first trajectory L1 or the second trajectory L2 may be superimposed on the image in which the real robot R2 is imaged. Alternatively, the interference state of the robot R2 and the virtual workbenches V4a and V4b may be superimposed on the image in which the real robot R2 is imaged.

The position of an attention point in the robot R2 is obtained using the robot coordinate system C as the reference coordinates by analyzing at least two portions of image data obtained from different viewpoints. The data of the first trajectory L1, the second trajectory L2, and the interference state that are to be superimposed on the image of the robot R2 employ the robot coordinate system C as the reference coordinates. Accordingly, virtual data of the first trajectory L1 and the second trajectory L2 can be superimposed on the image of the real robot R2.

(Data Modifying Unit)

The data modifying unit 24 has a function that modifies the virtual space data based on the augmented-reality-space data. The data modifying unit 24 receives the augmented-reality-space data from the augmented-reality-space-data generator 23. The data modifying unit 24 outputs data for modifying the virtual space data to the virtual-space-data holder 18.

The data modifying unit 24 is, for example, used for calibration of the virtual space data. For example, assume that the virtual robot V2 and the virtual workbenches V4a and V4b that are simulated in the virtual space VS are superimposed on the robot R2 and the workbenches R4a and R4b that are arranged in the real working space RS. In this case, the object in the real working space RS might not match the virtual object VB simulated in the virtual space VS. The data modifying unit 24 extracts the differences of the virtual objects VB from the objects in the real working space RS. Furthermore, the data modifying unit 24 makes the positions and the shapes of the virtual objects VB closer to the positions and the shapes of the objects in the real working space RS. Here, calibration of this virtual space data may be performed as necessary. In the case where the engineer 8 modifies the virtual space data, the calibration of this virtual space data may be subsidiarily used.

(Display Unit)

The display unit 9 has a function that displays the image of the augmented reality space to provide information to the engineer 8. The display unit 9 receives the augmented-reality-space data from the augmented-reality-space-data generator 23. This display unit 9 can employ a known image display device. The image display device can employ, for example, a head-mounted display or a liquid-crystal display panel.

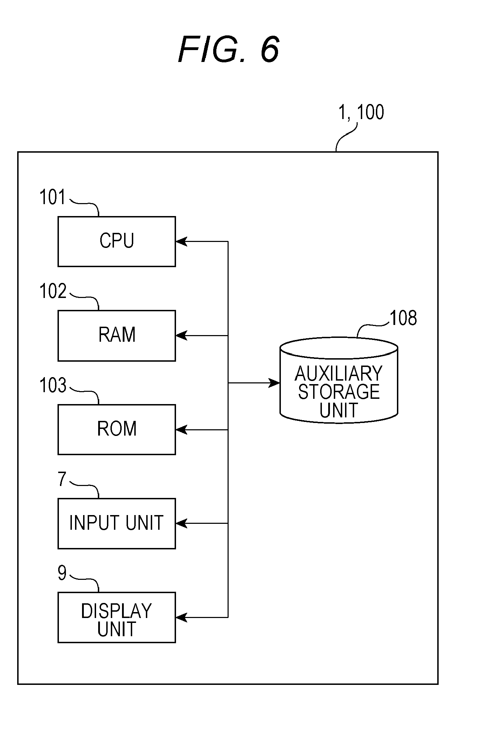

Fig. 6 is a diagram for describing a computer that achieves the robot device 1. As illustrated in Fig. 6, a computer 100 is an exemplary hardware included in the robot device 1 of this embodiment. The computer 100 includes, for example, an information processing device such as a personal computer that has a CPU and performs processing and control by software. The computer 100 is, for example, a computer system. That is, the computer system may include a CPU 101, a RAM 102, and a ROM 103 as a main storage unit, a keyboard, an input unit 7 such as a computer mouse and a programming pendant, a display unit 9 such as a display, an auxiliary storage unit 108 such as a hard disk, and similar member. In this computer 100, predetermined computer software is read into the hardware such as the CPU 101 and the RAM 102. Under control by the CPU 101, the input unit 7 and the display unit 9 operate, and data is read and written in the RAM 102 or auxiliary storage unit 108. This achieves functional components illustrated in Fig. 3.

(Robot Teaching Work)

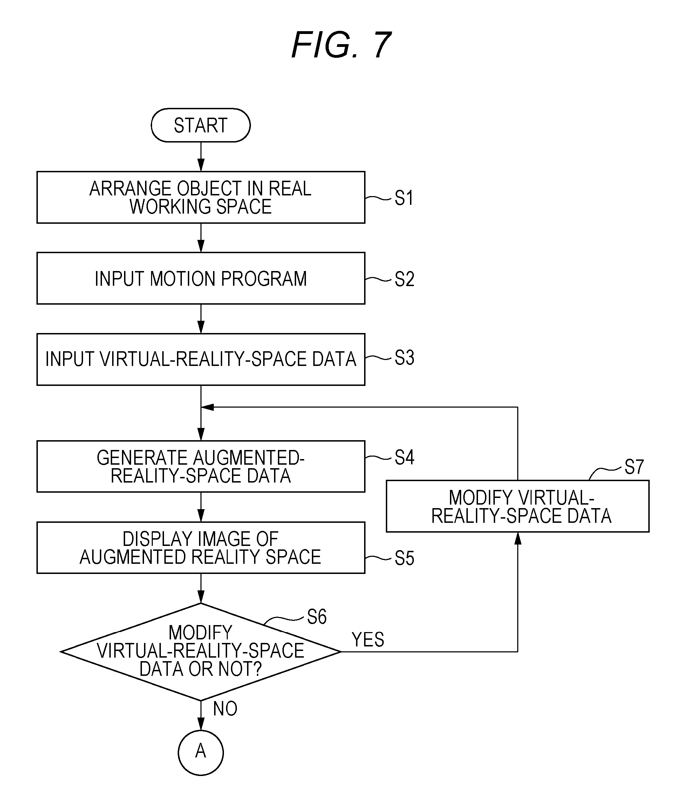

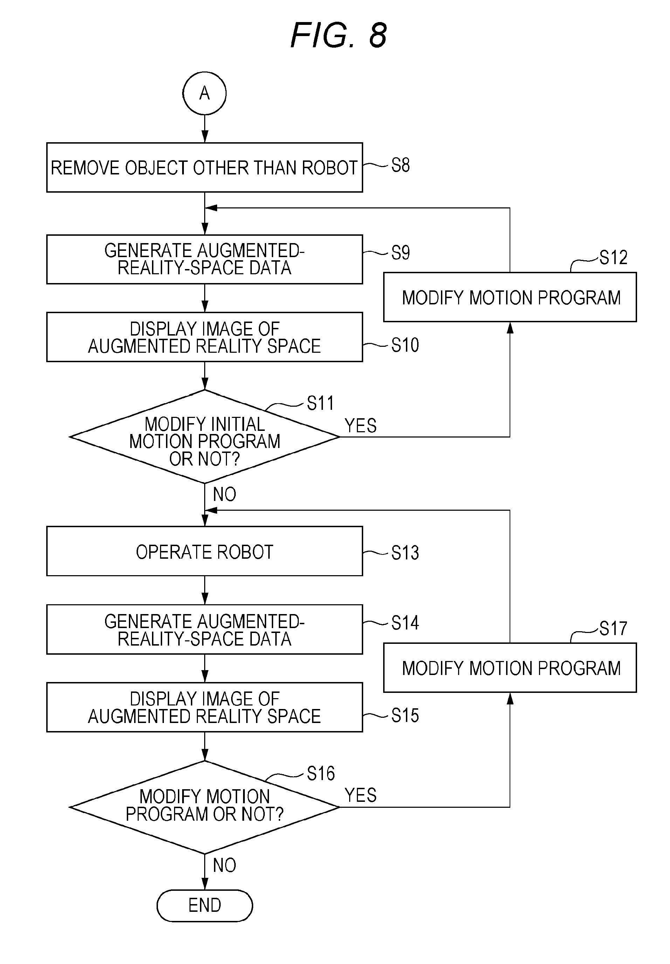

Subsequently, a description will be given of a robot teaching method using the robot device 1. Fig. 7 and Fig. 8 are diagrams for describing a main process of the robot teaching method. As illustrated in Fig. 7, firstly, the engineer arranges the robot R2 and the workbenches R4a and R4b in the real working space RS (in Step S1) (see Fig. 1). Subsequently, the engineer uses the input unit 7 to input an initial motion program to the program holder 14 (in Step S2) (see Fig. 3). Subsequently, the engineer uses the input unit 7 to input virtual-reality-space data to the virtual-space-data holder 18 (in Step S3) (see Fig. 3).

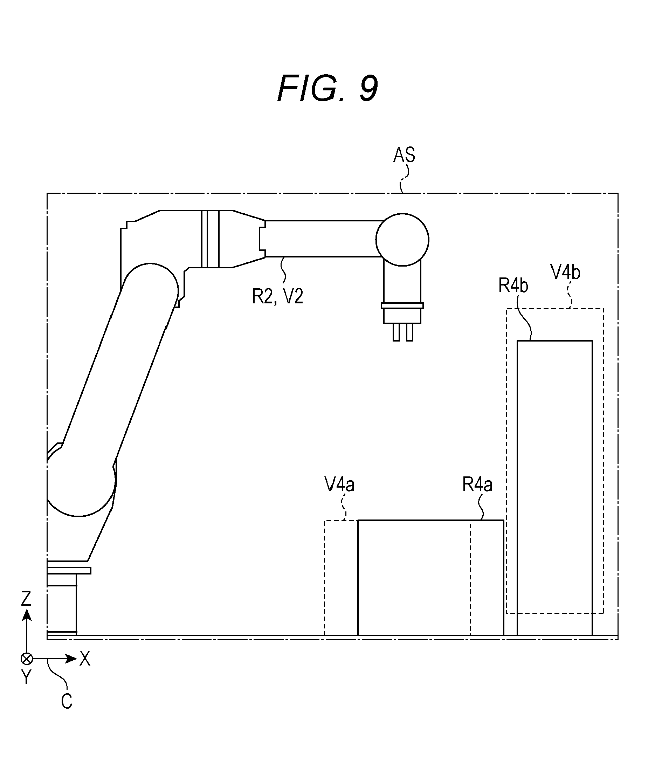

Before the robot R2 operates, calibration of the virtual space data is performed. Fig. 9 is a diagram illustrating an exemplary image of an augmented reality space AR. The image of the virtual space VS is superimposed on the image of the real working space RS obtained by the robot imaging unit 12 to generate the augmented-reality-space data (in Step S4). The augmented-reality-space data is used to display the image of the augmented reality space AR on the display unit 9 (in Step S5). As illustrated in Fig. 9, the display unit 9 displays an image in which the virtual object VB included in the virtual space data is superimposed on the image obtained by the camera 6c.

On this image, the real robot R2 and the real workbenches R4a and R4b are displayed, and the virtual robot V2 and the virtual workbenches V4a and V4b are displayed. A mismatch does not occur between the robot R2 and the virtual robot V2. Accordingly, the data of the virtual robot V2 is not modified in the virtual space data. On the other hand, the virtual workbench V4a has a different position along the X-axis direction from that of the workbench R4a. Furthermore, the virtual workbench V4b has a different position along the Z-axis direction and a different shape from those of the workbench R4b. Accordingly, the virtual-reality-space data is determined to be modified (YES in Step S6). The virtual-reality-space data may be modified by the engineer 8 using the input unit 7. Alternatively, the data processor 13 may detect a mismatch of positions and a difference between the shapes based on pixel and may calculate a modification amount to modify the virtual space data. In the case where the position and the shape of the virtual robot V2 with respect to the robot R2 and the positions and the shapes of the virtual workbenches V4a and V4b with respect to the workbenches R4a and R4b are determined not to be modified, the process proceeds to the subsequent process (NO in Step S6).

As illustrated in Fig. 8, after the calibration of the virtual space data is finished, an object arranged in the real working space RS other than the robot R2 is removed (in Step S8). After this step, only the robot R2 is present in the real working space RS.

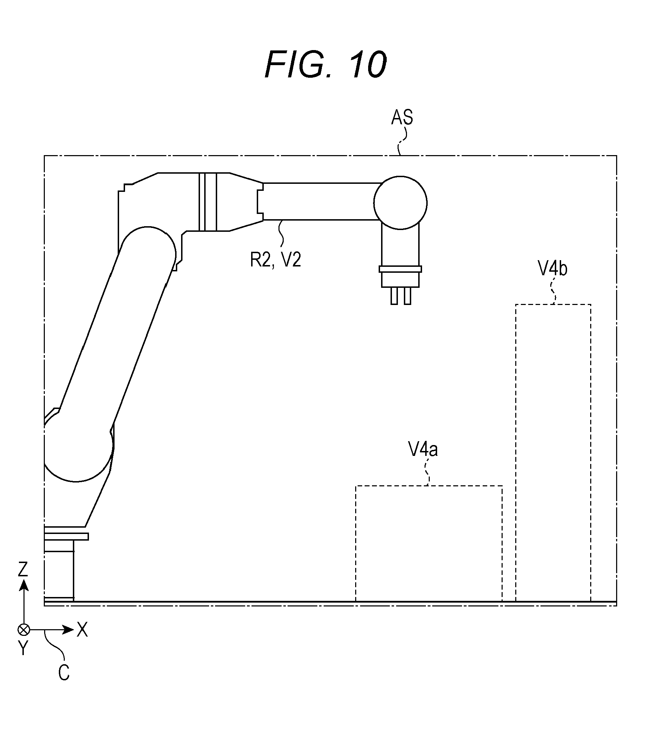

Fig. 10 is a diagram illustrating an exemplary image of the augmented reality space AR. As illustrated in Fig. 10, the image of the augmented reality space AR includes the robots R2 and V2 and the virtual workbenches V4a and V4b. That is, the real workbenches R4a and R4b have been removed from the real working space RS, and are not included in the image of the augmented reality space AR.

Subsequently, interference check of the initial motion program is performed. It is checked whether or not interference with the virtual workbenches V4a and V4b does not occur in the case where the hand 2d of the robot R2 moves in accordance with the first trajectory L1 specified by the initial motion program. More specifically, firstly, the image data, the virtual space data, and the first trajectory data are used to generate the augmented-reality-space data (in Step S9). Subsequently, the augmented-reality-space data is used to display the image of the augmented reality space AR (in Step S10). The image of the augmented reality space AR includes the robot R2 based on the image data, the virtual robot V2, the virtual workbenches V4a and V4b, the first trajectory L1, and the non-interference region W1, based on the virtual space data.

Fig. 11 is a diagram illustrating an exemplary image of the augmented reality space AR. Fig. 11 is a diagram in which a part of the augmented reality space AR is enlarged. This diagram illustrates the workbenches V4a and V4b, the first trajectory L1, and the non-interference region W1. The first trajectory L1 based on the initial motion program reaches an end point PE from a start point PS through a target point PO. According to the example illustrated in Fig. 11, the first trajectory L1 has a portion Eb that interferes with the workbench V4b. Furthermore, the non-interference region W1 has a portion Ea that interferes with the workbench V4b. Accordingly, the initial motion program is determined to be modified (YES in Step S11).

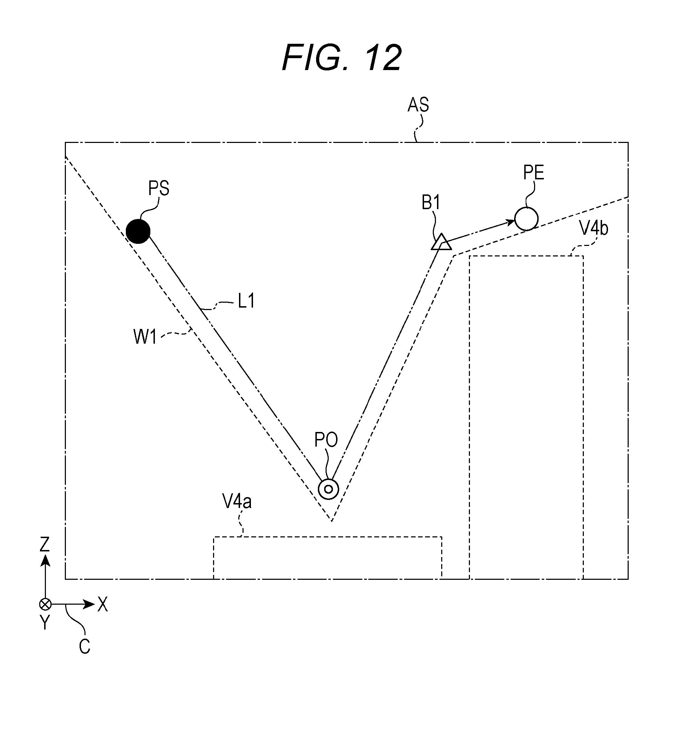

The engineer 8 uses the input unit 7 to modify the motion program (in Step S12). Subsequently, the modified motion program is used to generate the augmented-reality-space data again (in Step S9). Subsequently, the image of the augmented reality space AR is displayed on the display unit 9 (in Step S10). Fig. 12 is a diagram illustrating an exemplary image of the augmented reality space AR. As illustrated in Fig. 12, the modified first trajectory L1 has a new middle point B1. Here, when the first trajectory L1 is changed, the non-interference region W1 is automatically changed. This first trajectory L1 does not interfere with the workbench V4b. Furthermore, the non-interference region W1 does not interfere with the workbench V4b. Accordingly, the motion program is determined not to be modified, and the process proceeds to the subsequent process (NO in Step S11).

The interference in the case where the robot R2 is actually operated is checked. More specifically, firstly, the motion program that generates the first trajectory L1 is used to operate the robot R2 (in Step S13). Subsequently, the augmented-reality-space data is generated (in Step S14). Subsequently, the image of the augmented reality space AR is displayed on the display unit 9 (in Step S 15). Here, in Step S 14, the image data, the virtual space data, the first trajectory data, and the second trajectory data are used to generate the augmented-reality-space data. Fig. 13 is a diagram illustrating an exemplary image of the augmented reality space AR. In Fig. 13, the workbenches V4a and V4b, the first trajectory L1, the second trajectory L2, and the non-interference region W2 are included. Here, this non-interference region W2 is based on the second trajectory L2.

According to the example illustrated in Fig. 13, the second trajectory L2 has a portion Ec that interferes with the workbench V4b. Furthermore, the non-interference region W2 has a portion Ed that interferes with the workbench V4b.

Incidentally, in the motion of the robot R2, the second trajectory L2, which is an actual trajectory, may be mismatched with the first trajectory L1 based on the motion program. The motion control of the robot R2 may place the highest priority on a time of moving from a first position to a next second position. In this embodiment, a time of moving from the start point PS to the end point PE is set to the highest priority. Accordingly, if the movement within a predetermined time is achieved during the motion from the start point PS to the end point PE, the actual second trajectory L2 from the start point PS to the end point PE may be displaced from the first trajectory L1. For example, in the example illustrated in Fig. 13, it is found that the second trajectory L2 does not go through the target point PO. This phenomenon is called an inner turning phenomenon. Accordingly, in the case where it is desired to release the interference of the second trajectory L2 and the non-interference region W2 with the workbench V4b so as to make the second trajectory L2 to precisely go through the target point PO, the motion program is modified (YES in Step S16).

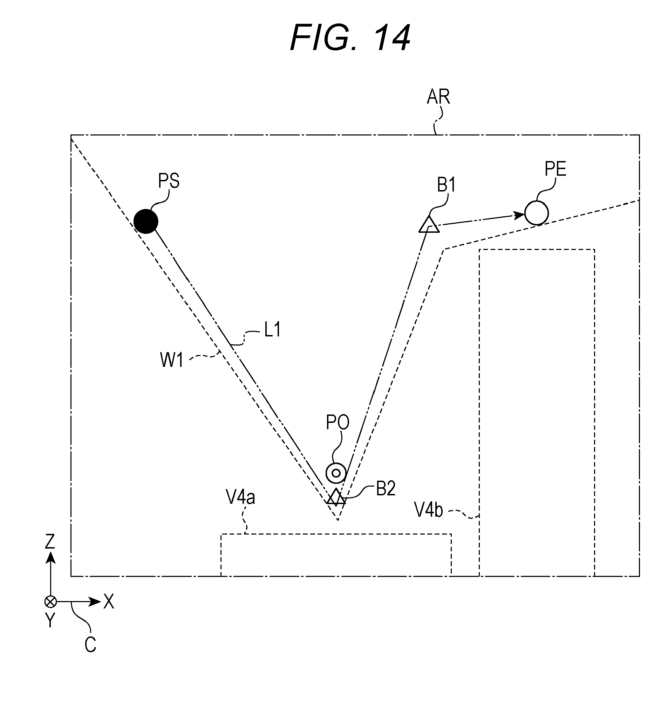

Fig. 14 is a diagram illustrating an exemplary image of the augmented reality space AR. To release the interference of the second trajectory L2 and the non-interference region W2 with the workbench V4b, the position of the middle point B1 is modified (in Step S17). Subsequently, the position of a middle point B2 is set such that the second trajectory L2 goes through the target point PO. The modification of these middle points B1 and B2 may be performed by the engineer 8 or may be performed by the program modifying unit 16. The program modifying unit 16 modifies the middle point B1 as follows. That is, the program modifying unit 16 calculates overlap lengths along the respective coordinate axis directions of the coordinate system C in the non-interference region W2 that interferes with the region occupied by the workbench V4b. Subsequently, the program modifying unit 16 shifts the position of the middle point B2 by that length. Additionally, the program modifying unit 16 may set the middle point B2 as follows. That is, firstly, the clearance of the second trajectory L2 with respect to the target point PO is calculated along each of the axis directions. Subsequently, the program modifying unit 16 shifts the position of the middle point B1 based on this clearance.

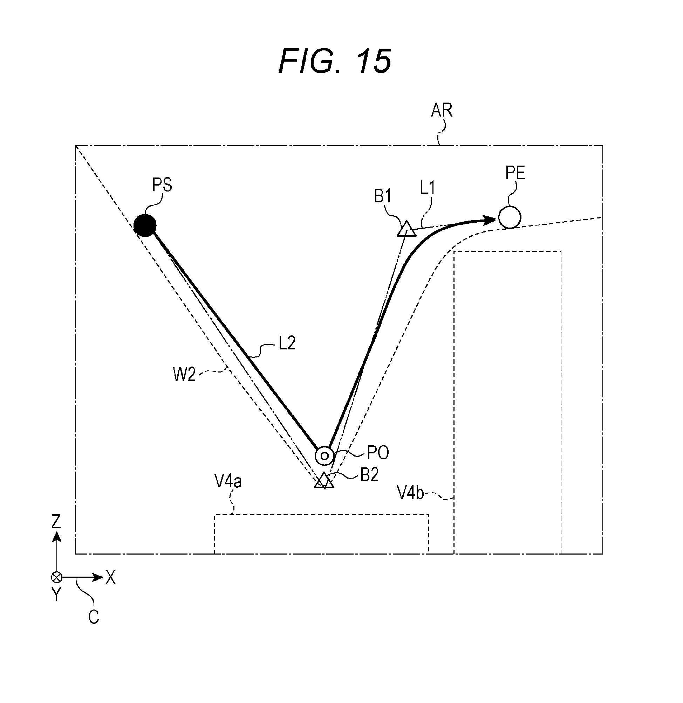

Subsequently, the modified motion program is used to operate the robot R2 again (in Step S13). Subsequently, the augmented-reality-space data is generated (in Step S14). Subsequently, the image of the augmented reality space AR is displayed on the display unit 9 (in Step S15). Fig. 15 is a diagram illustrating an exemplary image of the augmented reality space AR. As illustrated in Fig. 15, the modified motion program releases the interference of the second trajectory L2 and the non-interference region W2 with the workbench V4b. That is, the second trajectory L2 goes through the target point PO. Accordingly, the motion program is not modified (NO in Step S16).

With the above-described Steps S1 to S16, the teaching work to the robot R2 using the robot device 1 is completed.

According to the robot device 1 of this embodiment, the robot imaging unit 12 acquires the image data corresponding to the motion of the real robot R2. The robot device 1 has the virtual space data that simulates the virtual object VB present in the real working space RS in the virtual space. The augmented-reality-space-data generator 23 uses the image data and the virtual space data to generate the augmented-reality-space data. This allows superimposing the result of operating the real robot R2 on the virtual space where the virtual object VB is arranged. Accordingly, the teaching work is performed by operating the robot R2 without arranging the objects such as the real workbenches R4a and R4b in the real working space RS. Therefore, this allows performing the teaching work to the robot R2 without causing the actual interference between the robot R2 and the peripheral object. Accordingly, the teaching work by trial and error of the motion program can be safely and readily performed.

In the robot device 1 of this embodiment, the first trajectory-data generator 19 generates the first trajectory data, and the second trajectory-data generator 21 generates the second trajectory data. The augmented-reality-space-data generator 23 uses these data to generate the augmented-reality-space data. The display unit 9 displays these first trajectory L1 and second trajectory L2. This allows the engineer to check the difference between the set first trajectory L1 and the second trajectory L2, which is the result of operating the robot R2, by visual check. Accordingly, the engineer can readily and efficiently modify the motion program. Therefore, the robot device 1 can further facilitate the teaching work to the robot R2.

According to the robot device 1 of this embodiment, the interference-data generator 22 generates the interference data indicative of the interference state between the real robot R2 and the virtual object VB. This allows the engineer to check the presence of interference between the robot R2 and the virtual object VB by visual check. This allows the engineer to modify the motion program such that the interference with the virtual object VB does not occur. Accordingly, the engineer can readily teach the robot R2 a motion that does not interfere with the real peripheral object.

The description has been given of one embodiment of this disclosure above. This disclosure is not limited to the above-described embodiment. Various changes of this disclosure may be made without departing from the spirit and scope of this disclosure.

For example, the robot R2 may be a vertical double arm robot. On the image of the augmented reality space AR, various information that facilitates the teaching work may be displayed in addition to the image of the robot R2, the image of the virtual object VB, and the first trajectory L1, and the second trajectory L2.

In the above-described embodiment, as one example, a description has been given of the case where a two-dimensional trajectory is taught to the robot R2. The embodiment is not limited to this, and the robot device 1 may be used in the case where a three-dimensional trajectory is taught to the robot R2. In the above-described embodiment, the robot device 1 is used for the calibration of the virtual space data, the checking work of the first trajectory data, and the checking work of the second trajectory data. However, the robot device 1 may be used to perform one of these works.

The robot R2 to which the motion is taught using the above-described robot device 1 may be used to manufacture a desired product (a processing object).

The robot device and the method for manufacturing the processing object according to this disclosure may be the following first to seventh robot devices and first method for manufacturing a processing object.

The first robot device is a robot device for teaching a motion to a robot, and includes a program holder that holds a motion program for specifying the motion of the robot. The first robot device includes a robot controller, a robot imaging unit, a data processor, and a display unit. The robot controller operates the robot based on the motion program. The robot imaging unit acquires image data including the robot. The data processor includes a virtual-space-data holder and an augmented-reality-space-data generator. The virtual-space-data holder holds virtual space data. The augmented-reality-space-data generator uses at least the image data and the virtual space data to generate the augmented-reality-space data. The display unit uses the augmented-reality-space data to display an image of the augmented reality space. The virtual space data includes information on a virtual object that simulates an object present in a real working space of the robot in the virtual space.

In the second robot device according to the first robot device, the data processor includes a first trajectory-data generator. The first trajectory-data generator uses the motion program to generate first trajectory data indicative of a trajectory of the motion of the robot based on the motion program. The augmented-reality-space-data generator further uses the first trajectory data to generate the augmented-reality-space data.

In the third robot device according to the second robot device, the robot controller includes a second trajectory-data generator. The second trajectory-data generator uses at least one of sensor data output from a sensor of the robot and the image data to generate second trajectory data that is a result of operating the robot based on the motion program. The augmented-reality-space-data generator further uses the second trajectory data to generate the augmented-reality-space data.

In the fourth robot device according to the third robot device, the data processor includes an interference-data generator. The interference-data generator generates interference data indicative of an interference state of the robot with the virtual object. The interference-data generator uses the virtual space data and at least one of the first trajectory data and the second trajectory data to generate the interference data. The augmented-reality-space-data generator further uses the interference data to generate the augmented-reality-space data.

In the fifth robot device according to any one of the first to fourth robot devices, the data processor includes a data modifying unit that modifies the virtual space data.

In the sixth robot device according to any one of the first to fifth robot devices, the robot controller includes a program modifying unit that modifies the motion program.

In the seventh robot device according to any one of the first to sixth robot devices, the robot imaging unit is disposed based on a robot coordinate system set to the robot.

A first method for manufacturing a processing object includes manufacturing a processing object by the robot to which the motion is taught using any one of the first to seventh robot devices.

The foregoing detailed description has been presented for the purposes of illustration and description. Many modifications and variations are possible in light of the above teaching. It is not intended to be exhaustive or to limit the subject matter described herein to the precise form disclosed. Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims appended hereto.

**Claims**

1. A robot device (1), comprising:

   a robot controller (11) configured to operate a robot (R2) based on a motion program specifying a motion of the robot;
   a robot imaging unit (12) configured to acquire image data of an image including the robot; and
   a data processor (13), wherein
   the data processor includes:

      a virtual-space-data holder (18) configured to hold virtual space data including information on a virtual object (VB) in a virtual space (VS), the virtual space simulating a real working space (RS) of the robot, the virtual object simulating an object present in the real working space; and
      an augmented-reality-space-data generator (23) configured to generate augmented-reality-space data by use of the image data and the virtual space data.

2. The robot device according to claim 1, further comprising
   a display unit (9) configured to display an image of an augmented reality space by use of the augmented-reality-space data.

**3.** The robot device according to claim 1 or 2, wherein
the data processor further includes a first trajectory-data generator (19) configured to generate first trajectory data corresponding to a trajectory of the motion of the robot based on the motion program by use of the motion program, and
the augmented-reality-space-data generator is configured to generate the augmented-reality-space data by further use of the first trajectory data.

**4.** The robot device according to claim 3, wherein
the data processor further includes a second trajectory-data generator (21) configured to generate second trajectory data corresponding to a result of operating the robot based on the motion program by use of at least one of sensor data output from a sensor of the robot and the image data, and
the augmented-reality-space-data generator is configured to generate the augmented-reality-space data by further use of the second trajectory data.

**5.** The robot device according to claim 4, wherein
the data processor further includes an interference-data generator (22) configured to generate interference data indicative of an interference state of the robot with the virtual object,
the interference-data generator is configured to generate interference data by use of the virtual space data and at least one of the first trajectory data and the second trajectory data, and
the augmented-reality-space-data generator is configured to generate the augmented-reality-space data by further use of the interference data.

**6.** The robot device according to any one of claims 1 to 5, wherein
the data processor further includes a data modifying unit (24) configured to modify the virtual space data based on the augmented-reality-space data.

**7.** The robot device according to claim 6, wherein
the data modifying unit is configured to:

extract a difference of the virtual object from the object present in the real working space; and
modify the virtual space data such that a position and a shape of the virtual object become closer to a position and a shape of the object present in the real working space.

**8.** The robot device according to any one of claims 1 to 7, wherein
the robot controller includes a program modifying unit (16) configured to modify the motion program.

**9.** The robot device according to any one of claims 1 to 8, wherein
the robot imaging unit includes a plurality of cameras (6a to 6d) arranged in a site where the real working space is set.

**10.** The robot device according to any one of claims 1 to 9, wherein
the robot imaging unit is disposed in the site where the real working space is set, based on a robot coordinate system (C) set to the robot.

**11.** A method for manufacturing a processing object, comprising:

teaching a motion to a robot by using augmented-reality-space data generated by the robot device according to any one of claims 1 to 10; and
manufacturing a processing object by use of the robot.

EP 2 783 812 A2

# FIG. 1

# FIG. 2

## FIG. 3

EP 2 783 812 A2

# FIG. 4

VS

V2, VB

V4b, VB

V4a, VB

Z

Y    X

C

# FIG. 5

# FIG. 6

1, 100

101 CPU

102 RAM

103 ROM

7 INPUT UNIT

9 DISPLAY UNIT

108 AUXILIARY STORAGE UNIT

# FIG. 7

```
            ┌─────────────┐
            │    START    │
            └─────────────┘
                   │
                   ▼
    ┌──────────────────────────────┐
    │   ARRANGE OBJECT IN REAL     │───S1
    │        WORKING SPACE          │
    └──────────────────────────────┘
                   │
                   ▼
    ┌──────────────────────────────┐
    │     INPUT MOTION PROGRAM      │───S2
    └──────────────────────────────┘
                   │
                   ▼
    ┌──────────────────────────────┐
    │ INPUT VIRTUAL-REALITY-SPACE   │───S3
    │            DATA               │
    └──────────────────────────────┘
                   │
                   ▼
    ┌──────────────────────────────┐
    │     GENERATE AUGMENTED-       │───S4        ┌──────────────────┐───S7
    │     REALITY-SPACE DATA        │             │  MODIFY VIRTUAL-  │
    └──────────────────────────────┘             │ REALITY-SPACE DATA │
                   │                              └──────────────────┘
                   ▼
    ┌──────────────────────────────┐
    │       DISPLAY IMAGE OF        │
    │    AUGMENTED REALITY SPACE    │───S5
    └──────────────────────────────┘
                   │
                   ▼
            ◇ MODIFY          ───S6      YES
        VIRTUAL-REALITY-SPACE ─────────────
           DATA OR NOT?
                   │ NO
                   ▼
                 ( A )
```

# FIG. 8

A

REMOVE OBJECT OTHER THAN ROBOT —S8

GENERATE AUGMENTED-REALITY-SPACE DATA —S9

DISPLAY IMAGE OF AUGMENTED REALITY SPACE —S10

S11
MODIFY INITIAL MOTION PROGRAM OR NOT? — YES

S12
MODIFY MOTION PROGRAM

NO

OPERATE ROBOT —S13

GENERATE AUGMENTED-REALITY-SPACE DATA —S14

DISPLAY IMAGE OF AUGMENTED REALITY SPACE —S15

S16
MODIFY MOTION PROGRAM OR NOT? — YES

S17
MODIFY MOTION PROGRAM

NO

END

# FIG. 9

# FIG. 10

# FIG. 11

# FIG. 12

# FIG. 13

# FIG. 14

# FIG. 15

## FIG. 16

## FIG. 17A

## FIG. 17B

# FIG. 18

## FIG. 19A

## FIG. 19B

## FIG. 20

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2011080882 A